# EUROPEAN PATENT APPLICATION

(11) **EP 4 512 746 A1**
(43) Date of publication of application: **26.02.2025**
(21) Application number: 23851313.9
(22) Date of filing: 23.05.2023
(51) Int. Cl.: B65G 1/04, B65G 1/137

(54) **FAULT HANDLING METHOD AND SYSTEM FOR TRANSFER ROBOT**

(30) Priority: 09.08.2022 CN 202210952045
(71) Applicant: Beijing Jingdong Qianshi Technology Co., Ltd., Beijing 100176 (CN)
(72) Inventor: WEI, Yu, Beijing 100176 (CN)
(74) Representative: Manitz Finsterwald Patent- und Rechtsanwaltspartnerschaft mbB
(86) International application number: PCT/CN2023/095678
(87) International publication number: WO 2024/032083

(57) **Abstract**

A fault handling method and system for a transfer robot, relating to the technical field of robot control. The method comprises: in response to detecting fault alarm information sent by a transfer robot (102, 103) and determining that a target turnover box currently carried by the transfer robot satisfies a first preset condition, outputting prompt information; dispatching a target idle transfer robot to an abnormality replacement port (108) of a transport line device (104); and in response to detecting that the target idle transfer robot obtains a target turnover box at the abnormality replacement port, controlling the target idle transfer robot to continue to execute a warehousing transfer task. The method effectively avoids task interruption caused by faults of transfer robots, and improves the overall task processing efficiency.

## Description

### CROSS-REFERENCE TO RELATED APPLICATIONS

The present disclosure claims priority to Chinese Patent Application No. 202210952045.3, filed on August 9, 2022, and entitled "FAULT HANDLING METHOD AND SYSTEM FOR TRANSFER ROBOT", which is incorporated herein by reference in its entirety.

### TECHNICAL FIELD

The present disclosure relates to the field of computer technologies, specifically to the field of robot control technologies, and in particular, to a fault handling method and system for a transfer robot.

### BACKGROUND

Transfer robots are robots for performing operations such as transferring and conveying goods in scenarios of warehousing, sorting centers, and cargo transportation, and the like. Logistics robots are increasingly recognized as an important intelligent infrastructure in digitalization and automation processes of logistics and supply chain-related enterprises.

In the conventional technology, after a device fault occurs to a transfer robot, a person on site switches the transfer robot into a manual mode, drags the transfer robot to an idle area for maintenance, and restores the system task after the transfer robot is repaired. If an abnormal transfer robot is carrying a turnover box, a task of the turnover box may be delayed, and cannot be processed in time. The task can only be restored to normal status after maintenance of the transfer robot is completed, and then this previous task is continued.

### SUMMARY

Embodiments of the present disclosure provide a fault handling method and apparatus for transfer robots, device and storage medium.

In a first aspect, an embodiment of the present disclosure provides a fault handling method for a transfer robot. The method includes: outputting prompt information, in response to detecting fault alarm information sent by a transfer robot and determining that a target turnover box currently carried by the transfer robot meets a first preset condition; dispatching a target idle transfer robot to an abnormality replacement port of the conveying line device; and in response to detecting that the target idle transfer robot obtains the target turnover box at the abnormality replacement port, controlling the target idle transfer robot to continue to execute the inbound transfer task.

In a second aspect, an embodiment of the present disclosure provides a conveying method. The method includes: scanning, by using a scanning device, a box number of a turnover box on a conveying line; and conveying the turnover box corresponding to the box number to an abnormality replacement port, in response to determining that a conveying task status corresponding to the box number is that an inbound conveying task has been completed.

In a third aspect, an embodiment of the present disclosure provides a fault handling system for a transfer robot. The system comprises: a control device, configured to perform the fault handling method for a transfer robot; a conveying line device, configured to perform the conveying method; and a transfer robot, configured to receive a dispatch instruction sent by the control device, move, according to the dispatch instruction, from a current location to an abnormality replacement port to load a target turnover box, and send fault alarm information to the control device when a fault occurs.

In a fourth aspect, an embodiment of the present disclosure provides an electronic device. The electronic device includes: one or more processors; and a storage apparatus, which stores one or more programs, the one or more programs, when executed by the one or more processors, cause the one or more processors to perform the method according to any one of the embodiments described in the first aspect.

In a fifth aspect, an embodiment of the present disclosure provides a non-transitory computer-readable storage medium storing computer programs, when the computer programs are executed by a processor, the method according to any one of the embodiments described in the first aspect is implemented.

It should be understood that the content described in this section is not intended to identify key or important features of the embodiments of the present disclosure, nor is it intended to limit the scope of the present disclosure. Other features of the present disclosure will be easily understood by the following description.

### BRIEF DESCRIPTION OF THE DRAWINGS

FIG. 1 is an exemplary system architecture diagram to which embodiments of the present disclosure may be applied;
FIG. 2 is a flowchart of a fault handling method for a transfer robot according to an embodiment of the present disclosure;
FIG. 3 is a schematic diagram of an application scenario of a fault handling method for a transfer robot according to an embodiment of the present disclosure;
FIG. 4 is a flowchart of a conveying method according to another embodiment of the present disclosure;
FIG. 5 is a schematic diagram of a fault handling system for a transfer robot according to an embodiment of the present disclosure;
FIG. 6 is a schematic diagram of a fault handling system for a transfer robot according to another embodiment of the present disclosure; and
FIG. 7 is a schematic structural diagram of a computer system of a server suitable for implementing an embodiment of the present disclosure.

### DETAILED DESCRIPTION OF EMBODIMENTS

The following describes exemplary embodiments of the present disclosure with reference to the accompanying drawings, which include various details of embodiments of the present disclosure to facilitate understanding and should be considered merely exemplary. Therefore, those ordinary skill in the art should recognize that various changes and modifications may be made to the embodiments described herein without departing from the scope and spirit of the present disclosure. Similarly, for clarity and simplicity, in the following descriptions, descriptions of well-known functions and structures are omitted.

It should be noted that, on a non-conflict basis, embodiments of the present disclosure and the features in the embodiments may be mutually combined. The following describes embodiments of the present disclosure in detail with reference to the accompanying drawings.

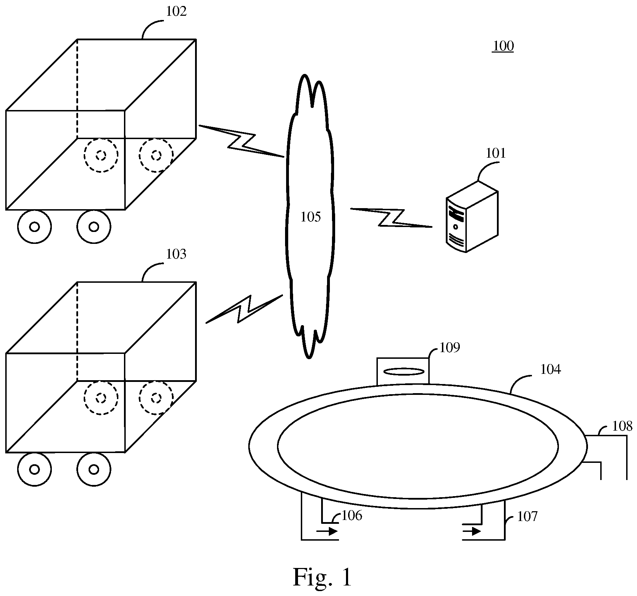

FIG. 1 illustrates an exemplary system architecture 100 to which a fault handling method for a transfer robot according to an embodiment of the present disclosure may be applied.

As shown in FIG. 1, the system architecture 100 may include a control device 101 for transfer robots, transfer robots 102 and 103, a conveying line device 104, and a network 105. A container for carrying a turnover box is installed on each of the transfer robots 102 and 103, and the turnover box is configured to carry an article to be inbound or outbound. A box pick-up port 106, a box drop-off port 107, an abnormality replacement port 108, and a picking station 109 are disposed on the conveying line device 104. The conveying line device 104 is configured to execute an outbound conveying task and an inbound conveying task. The inbound conveying task is to convey, through the conveying line device 104, a turnover box from the picking station 109 to the box pick-up port 106. The outbound conveying task is to convey, through the conveying line device 104, the turnover box from the box drop-off port 107 to the picking station 109. The transfer robots 102 and 103 are configured to execute an outbound transfer task and an inbound transfer task. The outbound transfer task is to transfer, through the transfer robot 102 or 103, a turnover box from a storage location to the box drop-off port 107 of the conveying line device. The inbound transfer task is to transfer, through the transfer robot 102 or 103, a turnover box from the box pick-up port 106 of the conveying line device to a corresponding storage location of the turnover box.

The network 105 is configured to provide a medium for communication links between the control device 101 and the transfer robots 102 and 103. The network 105 may include various connection types, such as a wired communication link, a wireless communication link, or an optical fiber cable.

The control device 101 outputs prompt information, in response to detecting fault alarm information sent by a transfer robot and determining that a target turnover box currently carried by the transfer robot meets a first preset condition, dispatches a target idle transfer robot to the abnormality replacement port of the conveying line device, and in response to detecting that the target idle transfer robot obtains the target turnover box at the abnormality replacement port, controls the target idle transfer robot to continue to execute an inbound transfer task.

The control device 101 may be a terminal device or a server, and is configured to control a transfer robot.

It should be noted that if the control device 101 is a server, the server may be hardware, or may be software. When the server is hardware, the server may be implemented as a distributed server cluster including a plurality of servers, or may be implemented as a single server. When the server is software, the server may be implemented as a plurality of pieces of software or a plurality of software modules (for example, configured to provide a fault handling service for a transfer robot), or may be implemented as a single piece of software or a single software module. This is not specifically limited herein.

If the control device 101 is a terminal device, the terminal device may be separately disposed, or may be disposed on an apparatus configured to control transfer robots.

The transfer robots 102 and 103 may interact with the control device 101 through the network 105 to receive or send information or the like. The transfer robots 102 and 103 may be mechanical and electronic devices that have computing capability and execution capability, or may be combinations of a terminal device having a control capability and a mechanical mechanism. For example, the transfer robot may include, but are not limited to, automatic guided transport vehicles (AGV) or the like.

It should be noted that the fault handling method for a transfer robot, provided in embodiments of the present disclosure, is generally performed by the control device 101.

It should be understood that the numbers of the control device, the network, the transfer robots, and the conveying line device in FIG. 1 are merely an example. Depending on implementation needs, there can be any number of control devices, networks, and transfer robots.

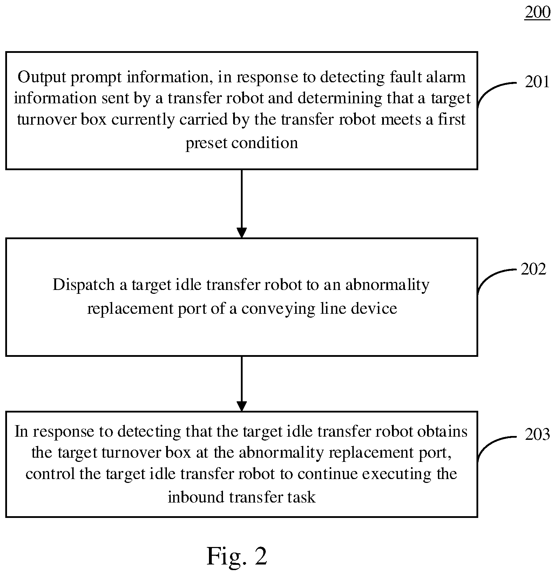

FIG. 2 illustrates a schematic flowchart 200 of a fault handling method for a transfer robot that may be applied to embodiments of the present disclosure. In this embodiment, the fault handling method for a transfer robot includes the following steps.

Step 201: Output prompt information, in response to detecting fault alarm information sent by a transfer robot and determining that a target turnover box currently carried by the transfer robot meets a first preset condition.

In this embodiment, the execution body (e.g., the control device 101 shown in FIG. 1) may detect, in real time or periodically, fault alarm information transmitted by a transfer robot. The fault alarm information is used to indicate that the transfer robot is faulty.

A container for carrying a turnover box is installed on the transfer robot.

The execution body outputs prompt information in response to detecting fault alarm information sent by a transfer robot and determining that a target turnover box currently carried by the transfer robot meets the first preset condition.

The first preset condition includes: a transfer task status corresponding to the turnover box is that an inbound transfer task is in progress, and a conveying task status corresponding to the turnover box is that an inbound conveying task has been completed.

Herein, the prompt information is used to instruct to place the target turnover box on the conveying line device. After receiving the prompt information, a staff may place the target turnover box on the conveying line device. The conveying line device is used to convey the turnover box, whose conveying task status is that inbound conveying has been completed, to an abnormality replacement port.

The inbound transfer task is to transfer, by a transfer robot, a turnover box from a box pick-up port of the conveying line device to a corresponding storage location of the turnover box, and the inbound conveying task is to convey, by the conveying line device, a turnover box from a picking station to the box pick-up port.

It should be noted that the number of target turnover boxes may be one or more, which is not limited in the present disclosure.

Step 202: Dispatch a target idle transfer robot to the abnormality replacement port of the conveying line device.

In this embodiment, the execution body may determine any one of idle transfer robots as the target idle transfer robot, or may determine, through an intelligent scheduling module, the closest transfer robot in the idle transfer robots, and then determine the closest transfer robot as the target idle transfer robot, and send a dispatch instruction to the target idle transfer robot, where the dispatch instruction is used to instruct the target idle transfer robot to move from a current place to the abnormality replacement port.

Herein, the intelligent scheduling module is configured to calculate an optimal selection or combination in various tasks, to generate a corresponding task.

Step 203: In response to detecting that the target idle transfer robot obtains the target turnover box at the abnormality replacement port, control the target idle transfer robot to continue to execute the inbound transfer task.

In this embodiment, the execution body may detect, in real time or periodically, whether the target idle transfer robot obtains the target turnover box at the abnormality replacement port, and in response to detecting that the target idle transfer robot obtains the target turnover box at the abnormality replacement port, controls the target idle transfer robot to continue to execute the inbound transfer task.

Particularly, after being picked at a workstation, the target turnover box to be inbound enters the conveying line device. The conveying line device is configured to execute the inbound conveying task, that is, convey the target turnover box from the picking station to the box pick-up port. Further, the execution body selects, by using an intelligent scheduling module, a closest idle transfer robot from the idle transfer robots and a recommended inbound storage location, and generates an inbound transfer task of this idle transfer robot. The idle transfer robot performs the inbound transfer task after obtaining the target turnover box from the box pick-up port, that is, transfers the target turnover box from the box pick-up port to the corresponding storage location. If a fault occurs to the transfer robot in the transfer process, the transfer robot sends fault alarm information. The execution body determines that the transfer robot is faulty in response to detecting the fault alarm information sent by the transfer robot, and determines that the target turnover box meets the first preset condition (that is, the transfer task status corresponding to a turnover box is that the inbound transfer task is in progress, and the conveying task status corresponding to the turnover box is that inbound conveying has been completed), then, the execution body outputs prompt information to instruct the staff to place the target turnover box on the conveying line device, and dispatches a target idle transfer robot to the abnormality replacement port of the conveying line device. Further, the execution body may further set the status of the inbound transfer task corresponding to the target turnover box to be that the inbound transfer task thereof is to be processed. In response to detecting that the target idle transfer robot obtains the target turnover box at the abnormality replacement port, the execution body controls the target idle transfer robot to continue to execute the inbound transfer task of the target turnover box, that is, to continue to execute the inbound task to be processed until the inbound task is completed.

In some optional implementations, the method further includes: outputting prompt information in response to detecting a fault alarm information sent by a transfer robot and determining that a target turnover box currently carried by the transfer robot meets a second preset condition.

In this implementation, the execution body may detect, in real time or periodically, fault alarm information sent by a transfer robot, and output the prompt information in response to detecting the fault alarm information sent by the transfer robot and determining that the target turnover box currently carried by the transfer robot meets the second preset condition.

The second preset condition includes: the transfer task status corresponding to a turnover box is that an outbound transfer task is in progress, and the conveying task status corresponding to the turnover box is that an outbound conveying task has not been completed.

Herein, the prompt information is used to instruct to place the target turnover box on the conveying line device. After receiving the prompt information, the staff may place the target turnover box on the conveying line device. The conveying line device is configured to convey the turnover box, whose conveying task status is that the outbound conveying task has not been completed, to the picking station for picking.

The outbound transfer task is to transfer, through a transfer robot, a turnover box from a storage location thereof to a box drop-off port of the conveying line device, and the outbound conveying task is to convey, through the conveying line device, the turnover box from the box drop-off port to the picking station.

Further, the execution body may further change the transfer task status corresponding to the target turnover box from that the transfer task is in progress to that the transfer task has been completed.

In this implementation, the prompt information is output in response to detecting the fault alarm information sent by the transfer robot and determining that the target turnover box currently carried by the transfer robot meets the second preset condition, thereby avoiding suspension of an outbound task that was caused by a fault of the transfer robot, and improving overall processing efficiency of the task.

In some optional implementations, the method further includes: outputting fault prompt information in response to detecting the fault alarm information sent by the transfer robot.

In this implementation, after receiving the fault alarm information sent by a transfer robot and determining that the transfer robot is faulty, the execution body may output fault prompt information. The fault prompt information is used to instruct to switch the transfer robot to a manual mode, and move the transfer robot to a preset idle area for fault maintenance.

In this implementation, the fault prompt information is output in response to detecting the fault alarm information sent by the transfer robot, which helps reduce impact of the faulty transfer robot on a transfer robot that is executing a task, and helps maintenance of the faulty transfer robot.

In some optional implementations, the target idle transfer robot is a transfer robot closest to the conveying line device among idle transfer robots.

In this implementation, the execution body determines, by using an intelligent scheduling module, the transfer robot closest to the conveying line device from the idle transfer robots, determines the closest transfer robot as the target idle transfer robot, and sends a dispatch instruction to the target idle transfer robot.

In this implementation, the transfer robot closest to the conveying line device is determined as the target idle transfer robot, and the target idle transfer robot is dispatched to the abnormality replacement port of the conveying line device to complete an inbound task, thereby further improving task processing efficiency.

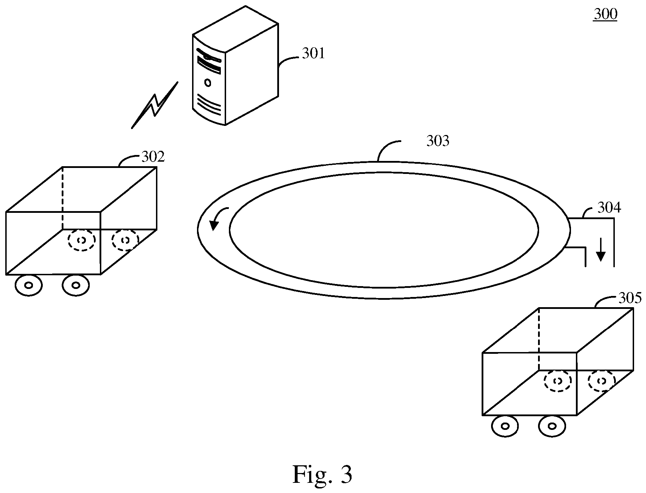

Continue to refer to FIG. 3. FIG. 3 is a schematic diagram of an application scenario of a fault handling method for a transfer robot according to an embodiment.

In the application scenario of FIG. 3, an execution body 301 determines, in response to detecting fault alarm information sent by a transfer robot 302, that the transfer robot is faulty, and determines that a target turnover box currently carried by the transfer robot meets a first preset condition, where the first preset condition includes: a transfer task status corresponding to the turnover box is that an inbound transfer task is in progress and a conveying task status corresponding to the turnover box is that an inbound conveying task has been completed. Then, the execution body outputs prompt information, where the prompt information is used to instruct to place the target turnover box on a conveying line device 303, and the conveying line device 303 is configured to convey the turnover box, whose conveying task status is that inbound conveying has been completed, to an abnormality replacement port 304. Further, by an intelligent scheduling module, a target idle transfer robot 305 is dispatched to the abnormality replacement port 304 of the conveying line device. In response to detecting that the target idle transfer robot 305 obtains the target turnover box at the abnormality replacement port, the target idle transfer robot is controlled to continue to execute the inbound conveying task.

In the fault handling method for a transfer robot in embodiments of the present disclosure, the prompt information is output in response to detecting the fault alarm information sent by the transfer robot and determining that the target turnover box currently carried by the transfer robot meets the first preset condition; the target idle transfer robot is dispatched to the abnormality replacement port of the conveying line device; and in response to detecting that the target idle transfer robot obtains the target turnover box at the abnormality replacement port, the target idle transfer robot is controlled to continue to execute the inbound transfer task, thereby avoiding suspending of a task caused by fault of the transfer robot, and improving overall processing efficiency of the task.

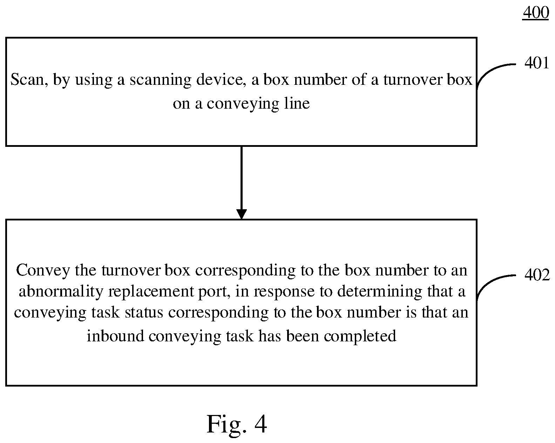

Further refer to FIG. 4, which illustrates a process 400 of an embodiment of a conveying method. In this embodiment, the process 400 of the conveying method in this embodiment may include the following steps.

Step 401: Scan, by using a scanning device, a box number of a turnover box on a conveying line.

In this embodiment, an execution body (the conveying line device shown in FIG. 1) may scan, by using a scanning device, the box number of a turnover box on the conveying line.

The scanning device may be an apparatus for converting graphic or image information into a digital signal in a scanning manner in the conventional technology or in a future development technology, for example, a scanning gun, a BCR (bar code reader), or the like, which is not limited herein.

Step 402: Convey the turnover box corresponding to the box number to an abnormality replacement port, in response to determining that a conveying task status corresponding to the box number is that an inbound conveying task has been completed.

In this embodiment, the execution body may determine the conveying task status corresponding to a box number. If the conveying task status corresponding to a box number is that an inbound conveying task has been completed, the turnover box corresponding to the box number is conveyed to the abnormality replacement port.

In some optional implementations, the method further includes: conveying a turnover box corresponding to a box number to a box pick-up port, in response to determining that the conveying task status corresponding to the box number is that the inbound conveying task is in progress.

In this implementation, the execution body may determine the conveying task status corresponding to a box number. If the conveying task status corresponding to the box number is that the inbound conveying task is in progress, the turnover box corresponding to the box number is conveyed to the box pick-up port.

In this implementation, the turnover box corresponding to a box number is conveyed to the box pick-up port, in response to determining that the conveying task status corresponding to the box number is that the inbound conveying task is in progress, thereby implementing inbound conveying of the turnover box.

In some optional implementations, the method further includes: conveying a turnover box corresponding to a box number to a picking station, in response to determining that the conveying task status corresponding to the box number is that an outbound conveying task is in progress and that a transfer task status corresponding to the box number is that an outbound transfer task has been completed.

In this implementation, the execution body may determine the conveying task status corresponding to a box number and the transfer task status corresponding to the box number. If the conveying task status corresponding to the box number is that the outbound conveying task is in progress, and the transfer task status corresponding to the box number is that the outbound transfer task has been completed, the turnover box corresponding to the box number is conveyed to the picking station.

In this implementation, the turnover box corresponding to a turnover box number is conveyed to the picking station, in response to determining that the conveying task status corresponding to the turnover box number is that the outbound conveying task is in progress and the transfer task status corresponding to the turnover box is that the outbound transfer task has been completed, thereby implementing outbound conveying of the turnover box.

In the foregoing embodiment of the present disclosure, the process 400 of the conveying method in this embodiment illustrates scanning a box number of a turnover box on the conveying line by using a scanning device, and conveying the turnover box corresponding to the box number to the abnormality replacement port, in response to determining that the conveying task status corresponding to the box number is that the inbound conveying task has been completed, thereby implementing inbound conveying of a placed turnover box of a faulty robot.

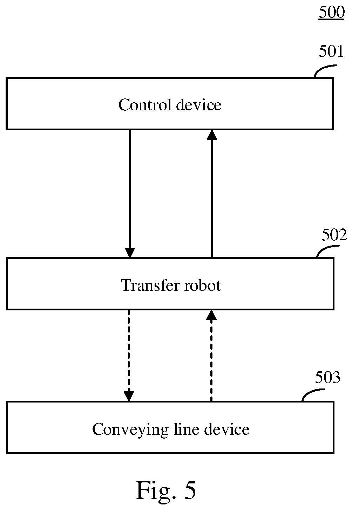

Further refer to FIG. 5. An embodiment of the present disclosure provides a fault handling system for a transfer robot.

In this embodiment, the system includes a control device 501, a transfer robot 502, and a conveying line device 503.

The control device 501 is configured to perform the fault handling method described in the foregoing Embodiment 2. The conveying line device 503 is configured to perform the conveying method described in the foregoing Embodiment 4. The transfer robot 502 is configured to receive a dispatch instruction sent by the control device, move, according to the dispatch instruction, from a current location to an abnormality replacement port to load a turnover box, and send fault alarm information to a console when fault occurs.

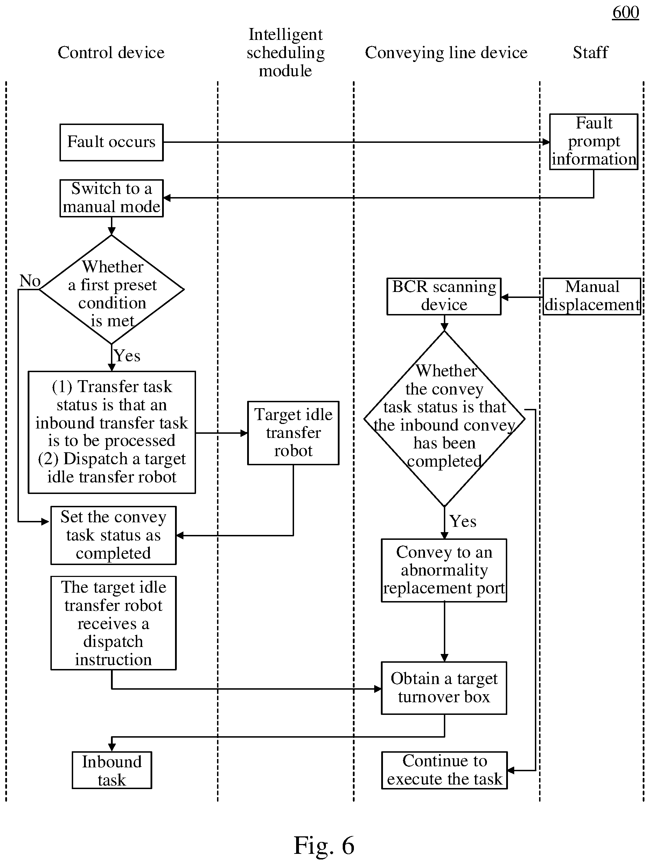

In a detailed example, as shown in FIG. 6, if a transfer robot develops a fault during a transfer process, the transfer robot sends fault alarm information, and the control device determines that the transfer robot is faulty in response to detecting the fault alarm information sent by the transfer robot, and may output fault prompt information to instruct the transfer robot to switch to a manual mode. Further, the control device determines whether a target turnover box carried by the transfer robot meets a first preset condition, that is, determines whether a transfer task status corresponding to the turnover box is that an inbound transfer task is in progress and whether a conveying task status corresponding to the turnover box is that inbound conveying has been completed. If the first preset condition is met, the control device outputs prompt information to instruct a staff to place the target turnover box on the conveying line device (manually placed), determines, by using an intelligent scheduling module, a target idle transfer robot in idle transfer robots, and sends a dispatch instruction to the target idle transfer robot to control the target idle transfer robot to move from a current location to the abnormality replacement port of the conveying line device. Further, the control device may further set a transfer task status corresponding to the target turnover box to be that the inbound transfer task is to be processed.

In addition, the conveying line device may scan a box number of a turnover box on the conveying line by using a scanning device, for example, a BCR scanning device, and determine whether a conveying task status corresponding to the box number is that an inbound conveying task has been completed. If the conveying task status corresponding to the box number is that the inbound conveying task has been completed, the turnover box (target turnover box) corresponding to the box number is conveyed to the abnormality replacement port.

In response to detecting that the target idle transfer robot obtains the target turnover box at the abnormality replacement port, the control device controls the target idle transfer robot to continue to execute the inbound transfer task of the target turnover box, that is, to continue to execute the inbound transfer task to be processed until the inbound transfer task is completed.

It should be understood that the numbers of the control device 501, the transfer robot 502, and the conveying line device 503 in FIG. 5 are merely an example. Depending on implementation needs, there can be any number of transfer robots and conveying line devices.

According to an embodiment of the present disclosure, the present disclosure further provides an electronic device and a readable storage medium.

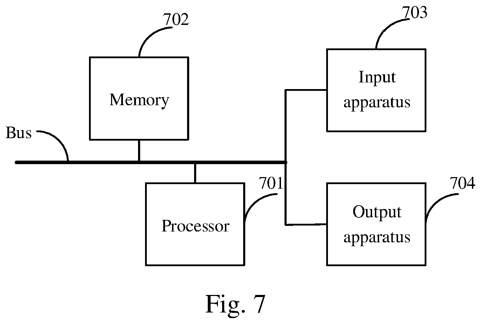

As shown in Fig. 7, which is a block diagram of an electronic device of a fault handling method for a transfer robot according to an embodiment of the present disclosure.

The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processing, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 7, the electronic device includes: one or more processors 701, a memory 702, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories if desired. Similarly, a plurality of electronic devices may be connected, and the devices provide some necessary operations (for example, as a server array, a set of blade servers, or a multi-processor system). In Fig. 7, one processor 701 is used as an example.

The memory 702 is a non-transitory computer readable storage medium provided by the present disclosure. The memory stores instructions executable by at least one processor, so that the at least one processor performs the fault handling method for a transfer robot provided by the present disclosure. The non-transitory computer readable storage medium of the present disclosure stores computer instructions for causing a computer to perform the fault handling method for a transfer robot.

The memory 702, as a non-transitory computer readable storage medium, may be used to store non-transitory software programs, non-transitory computer executable programs and modules, such as program instructions/modules corresponding to the fault handling method for transfer robots in the embodiments of the present disclosure. The processor 701 executes the non-transitory software programs, instructions, and modules stored in the memory 702 to execute various functional applications and data processing of the server, that is, to implement the fault handling method for a transfer robot in the foregoing method embodiment.

The memory 702 may include a storage program area and a storage data area, where the storage program area may store an operating system and at least one function required application program; and the storage data area may store data created by the use of the electronic device according to the fault handling method for transfer robots, etc. In addition, the memory 702 may include a high-speed random access memory, and may also include a non-transitory memory, such as at least one magnetic disk storage device, a flash memory device, or other non-transitory solid-state storage devices. In some embodiments, the memory 702 may optionally include memories remotely provided with respect to the processor 701, and these remote memories may be connected to the fault handling electronic device for transfer robots through a network. Examples of the above network include but are not limited to the Internet, intranet, local area network, mobile communication network, and combinations thereof.

The electronic device of the fault handling method for a transfer robot may further include: an input apparatus 703 and an output apparatus 704. The processor 701, the memory 702, the input apparatus 703, and the output apparatus 704 may be connected through a bus or in other methods. In Fig. 7, connection through a bus is used as an example.

The input apparatus 703 may receive input digital or character information, such as touch screen, keypad, mouse, trackpad, touchpad, pointing stick, one or more mouse buttons, trackball, joystick and other input apparatuses. The output apparatus 704 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), the Internet, and blockchain networks.

The computer system may include a client and a server. The client and the server are generally far from each other and usually interact through the communication network. The relationship between the client and the server is generated by computer programs that run on the corresponding computer and have a client-server relationship with each other.

According to the technical scheme in embodiments of the present disclosure, suspending of an outbound task caused by fault of the transfer robot is effectively avoided, improving overall processing efficiency of the task.

It should be understood that the various forms of processes shown above may be used to reorder, add, or delete steps. For example, the steps described in the present disclosure may be performed in parallel, sequentially, or in different orders. As long as the desired results of the technical solution disclosed in the present disclosure can be achieved, no limitation is made herein.

The above detailed embodiments do not constitute limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

## Claims

1. A fault handling method for a transfer robot, wherein the method comprises:
outputting prompt information, in response to: detecting fault alarm information sent by a transfer robot and determining that a target turnover box currently carried by the transfer robot meets a first preset condition, wherein the first preset condition comprises: a transfer task status corresponding to a turnover box is that an inbound transfer task is in progress, and a conveying task status corresponding to the turnover box is that an inbound conveying task has been completed; wherein the prompt information is for instructing placing the target turnover box on a conveying line device, and the conveying line device is configured to convey a turnover box whose conveying task status is that the inbound conveying has been completed to an abnormality replacement port;
dispatching a target idle transfer robot to the abnormality replacement port of the conveying line device; and
in response to detecting that the target idle transfer robot obtains the target turnover box at the abnormality replacement port, controlling the target idle transfer robot to continue executing the inbound transfer task.

2. The method according to claim 1, further comprising:
outputting prompt information, in response to detecting fault alarm information sent by a transfer robot and determining that a target turnover box currently carried by the transfer robot meets a second preset condition, wherein the second preset condition comprises: a transfer task status corresponding to a turnover box is that an outbound transfer task is in progress, and a conveying task status corresponding to the turnover box is that an outbound conveying task has not been completed; and
changing the transfer task status corresponding to the target turnover box from that the transfer task is in progress to that the transfer task has been completed.

3. The method according to claim 1, further comprising:
outputting fault prompt information in response to detecting the fault alarm information sent by a transfer robot, wherein the fault prompt information is for instructing the transfer robot to switch to a manual mode, and move the transfer robot to a preset idle area for fault maintenance.

4. The method according to any one of claims 1 to 3, wherein the target idle transfer robot is a transfer robot closest to the conveying line device in idle transfer robots.

5. A conveying method, comprising:
scanning, by a scanning device, a box number of a turnover box on a conveying line; and
conveying the turnover box corresponding to the box number to an abnormality replacement port, in response to determining that a conveying task status corresponding to the box number is that an inbound conveying task has been completed.

6. The method according to claim 5, further comprising:
conveying the turnover box corresponding to the box number to a box pick-up port, in response to determining that the conveying task status corresponding to the box number is that the inbound conveying task is in progress.

7. The method according to claim 5, further comprising:
conveying the turnover box corresponding to the box number to a picking station, in response to determining that the conveying task status corresponding to the box number is that an outbound conveying task is in progress and that a transfer task status corresponding to the box number is that an outbound transfer task has been completed.

8. A fault handling system for a transfer robot, wherein the system comprises a control device, a conveying line device, and a transfer robot, wherein the control device is configured to perform the method according to one of claims 1 to 4, the conveying line device is configured to perform the method according to one of claims 5 to 7, the transfer robot is configured to receive a dispatch instruction sent by the control device, move, according to the dispatch instruction, from a current location to an abnormality replacement port to load a target turnover box, and send fault alarm information to the control device when a fault occurs.

9. An electronic device, comprising:
at least one a processor; and
a memory communicatively connected to the at least one processor, wherein
the memory stores that can be executed by the at least one processor, so that the at least one processor is capable of performing the method according to any one of claims 1 to 4 or claims 5 to 7.

10. A non-transitory computer-readable storage medium storing computer instructions, wherein the computer instructions are used to enable a computer to perform the method according to any one of claims 1 to 4 or claims 5 to 7.
